# EUROPEAN PATENT APPLICATION

(11) **EP 4 796 594 A1**
(43) Date of publication of application: **26.08.2026**
(21) Application number: 24909577.9
(22) Date of filing: 12.06.2024
(51) Int. Cl.: C08L 67/04

(54) **COMPOSITE MATERIAL FOR 3D PRINTING, 3D PRINTING FILAMENT AND FFF PRINTING METHOD**

(30) Priority: 27.12.2023 CN 202311826315
(71) Applicant: JF Polymers (SU Zhou) Co. Ltd., Jiangsu 215500 (CN)
(72) Inventor: HAO, Mingyang, Suzhou, Jiangsu 215500 (CN); LUO, Xiaofan, Suzhou, Jiangsu 215500 (CN); LV, Jie, Suzhou, Jiangsu 215500 (CN)
(74) Representative: Santarelli
(86) International application number: PCT/CN2024/098630
(87) International publication number: WO 2025/138615

(57) **Abstract**

Provided are a composite material for three-dimensional (3D) printing, a 3D printing filament, and a fused filament fabrication (FFF) printing method. The composite material includes a continuous matrix phase and a fibrous dispersed phase distributed in the continuous matrix phase. The continuous matrix phase is made of a first crystalline polymer and the fibrous dispersed phase is made of a second crystalline polymer. The fibrous dispersed phase has a micro-/nano-scale fibrous structure. A melting point of the second crystalline polymer is higher than a melting point of the first crystalline polymer. The composite material for 3D printing is further subjected to single-screw extrusion to produce the 3D printing filament. The 3D printing filament is then subjected to FFF printing. Both an extrusion temperature and a printing temperature are higher than the melting point of the first crystalline polymer and lower than the melting point of the second crystalline polymer. The high-melting-point fibrous dispersed phase is introduced into the continuous matrix phase by an *in-situ* fibrillation process to produce the composite material. In addition, a specially designed temperature profile is employed to achieve both improved heat resistance and excellent warpage resistance for the printing material.

## Description

### CROSS-REFERENCE TO RELATED APPLICATION

The present disclosure claims priority to and rights of Patent Application No. 202311826315.7 filed with the China National Intellectual Property Administration (CNIPA) on December 27, 2023 and entitled " COMPOSITE MATERIAL FOR 3D PRINTING, 3D PRINTING FILAMENT AND FFF PRINTING METHOD ", which is incorporated herein by reference in its entirety.

### Technical Field

The present disclosure relates to the technical field of three-dimensional (3D) printing, and specifically, to a composite material for 3D printing, a 3D printing filament, and a fused filament fabrication (FFF) printing method.

### Background of the Invention

Material-extrusion based 3D printing (ME-3DP) is one of the most mainstream forms of polymer additive manufacturing technology. The principle of ME-3DP involves melting a polymer at a high temperature to achieve melt fluidity and conducting layer-by-layer formation in a metered manner. Among ME-3DP techniques, FFF is one of the mainstream forms.

In FFF printing, some materials exhibit poor heat resistance due to low crystallinity, which limits application scenarios of these materials. For example, polylactic acid (PLA) is currently the most versatile printing material in FFF printing. Owing to excellent warpage resistance, interlayer adhesion, fully bio-based and biodegradable properties, PLA has become one of the most user-friendly and market-recognized materials. However, with the expansion of FFF printing application fields, the low heat resistance of PLA-printed parts (with a heat softening temperature of approximately 60°C) has become one of the long-standing pain points of PLA materials in use. Specifically, PLA has a glass transition temperature T_{g} of about 60°C and a melting temperature Tₘ of about 150°C to 180°C. Theoretically, PLA has the potential to withstand a temperature of 100°C or higher. However, PLA exhibits poor crystallization ability, and has a low crystallization rate under typical FFF printing conditions. As a result, a printed part has low crystallinity and is tolerant merely to a temperature of approximately 60°C or lower, making PLA suitable only for some application scenarios with low heat resistance requirements. In addition, the poor crystallization ability and low T_{g} of PLA contribute to the excellent warpage resistance of PLA.

Currently, there are several common technical routes for improving the heat resistance of PLA-printed parts:

### (1) Significant improvement in the crystallization ability/crystallization rate of PLA

This technical route is based on improving the crystallization ability of PLA and increasing the nucleation and growth rates during PLA printing to achieve high crystallinity for a printed part, thereby enhancing the heat resistance of the printed part. During an FFF printing process, due to forced air cooling, a melt produced after PLA is melted and extruded from a nozzle undergoes rapid cooling. During the rapid cooling, a cooling rate can even reach several hundred to several thousand °C/s initially. Under such high-rate cooling, it is difficult for PLA to acquire high crystallinity. Moreover, even if the crystallization ability is improved, there remains the problem that high crystallinity during PLA printing leads to a significant decline in warpage resistance. The corresponding mechanism is that, during a cooling/solidification process of a polymer melt, the formation of a crystal structure induces substantial volume shrinkage in the material, resulting in internal stress and thus causing warpage of a printed part.

### (2) Blending of PLA with other materials with high heat resistance for modification

PLA can be blended with other materials having high T_{g} or high crystallinity to prepare blended materials. In this technical route, the improvement in heat resistance generally depends on the content of a highly heat-resistant component. If the content is too low, the improvement in heat resistance will not be significant. If the content is too high, the interlayer adhesion in a printed part will be heavily compromised due to a multi-phase system. Additionally, the excessive introduction of materials with high T_{g} or high crystallinity will lead to a reduction in the warpage resistance of PLA.

### (3) Annealing crystallization for printed parts

T_{g} is the critical temperature at which molecular chain segments of the polymer gain the ability to move. At temperatures lower than T_{g}, the molecular chain segments are "frozen" and lack the ability to move. At temperatures higher than or equal to T_{g}, the molecular chain segments are "unfrozen" and gain the ability to move. A crystallization process of the polymer is a process of ordered arrangement of molecular chain segments, which requires the molecular chain segments to be movable. Therefore, a temperature higher than or equal to T_{g} is the objective temperature condition for crystallization of the polymer. One of the technical routes for improving the heat resistance of a PLA-printed part involves subjecting the PLA-printed part to an annealing heat treatment at a temperature higher than or equal to T_{g}. The corresponding mechanism is as follows: The PLA-printed part is heated to the temperature higher than or equal to T_{g}, such that molecular chain segments of PLA gain mobility and undergo crystallization. In this way, the crystallinity of the PLA-printed part is enhanced, and the heat resistance of the PLA-printed part is improved. This is referred to as the "annealing crystallization process". However, during the annealing crystallization process, since the molecular chain segments gain mobility at the temperature higher than or equal to T_{g}, the PLA-printed part also carries a risk of deformation during the crystallization. The addition of the annealing crystallization process also increases the process cost.

In view of this, the present disclosure is specifically proposed.

### Summary of the Invention

An objective of the present disclosure is to provide a composite material for 3D printing, a 3D printing filament, and an FFF printing method, so as to address the technical pain points in the above-mentioned technical routes for improving the heat resistance of materials used in FFF printing.

The present disclosure is implemented as follows:
In a first aspect, the present disclosure provides a composite material for 3D printing, including: a continuous matrix phase and a fibrous dispersed phase distributed in the continuous matrix phase, where the continuous matrix phase is made of a first crystalline polymer and the fibrous dispersed phase is made of a second crystalline polymer; the fibrous dispersed phase has a micro-/nano-scale fibrous structure; and a melting point of the second crystalline polymer is higher than a melting point of the first crystalline polymer.

Optionally, the melting point of the second crystalline polymer is 30°C or more higher than the melting point of the first crystalline polymer; and/or a mass percentage of the fibrous dispersed phase in the composite material for 3D printing is 3% to 30%; and/or the micro-/nano-scale fibrous structure is mainly a fibrous network structure resulting from the interweaving of fibers with an aspect ratio of greater than 10.

Optionally, the first crystalline polymer is PLA; and/or, the second crystalline polymer includes a crystalline polyester material and a crystalline polyamide material.

In a second aspect, the present disclosure also provides a preparation method of the composite material for 3D printing, including: subjecting a blend of the first crystalline polymer and the second crystalline polymer to *in-situ* fibrillation, such that the fibrous dispersed phase is formed from the second crystalline polymer in the first crystalline polymer.

In a third aspect, the present disclosure also provides a method for preparing a 3D printing filament, including: subjecting the composite material for 3D printing to single-screw extrusion to produce the 3D printing filament, where an extrusion temperature is higher than the melting point of the first crystalline polymer and lower than the melting point of the second crystalline polymer.

In a fourth aspect, the present disclosure also provides a 3D printing filament prepared by the method for preparing the 3D printing filament.

In a fifth aspect, the present disclosure also provides a use of the composite material for 3D printing or the 3D printing filament in ME-3DP.

In a sixth aspect, the present disclosure also provides an FFF printing method, including: conducting FFF printing with the 3D printing filament, where a printing temperature is higher than the melting point of the first crystalline polymer and lower than the melting point of the second crystalline polymer.

In a seventh aspect, the present disclosure also provides an FFF printed part printed by the FFF printing method. Optionally, a Vicat softening temperature (VST) of the FFF printed part is higher than 100°C.

The present disclosure has the following beneficial effects: In the composite material of the present disclosure, a first crystalline polymer with a low melting point (such as PLA) is used as a continuous matrix phase and a second crystalline polymer with a high melting point is used as a fibrous dispersed phase. The fibrous dispersed phase has a micro-/nano-scale fibrous structure. When 3D printing is conducted with the composite material as a main material at a temperature below the melting point of the second crystalline polymer, the second crystalline polymer as the fibrous dispersed phase can retain its micro-/nano-scale fibrous structure without damage to its crystalline structure. When the composite material is directly introduced into a printed part, the fibrous dispersed phase does not undergo a warpage behavior caused by crystallization-induced internal stress. Moreover, the high specific surface area of the fibrous dispersed phase enables a significant heterogeneous nucleation effect, promoting an increase in crystallinity of the printed part including the first crystalline polymer (such as PLA). Thus, a printed part printed using a material with poor heat resistance (such as PLA) as a main material possesses excellent heat resistance and warpage resistance.

### Brief Description of the Drawings

To describe the technical solutions in the embodiments of the present disclosure clearly, the accompanying drawings required for describing the embodiments are briefly described below. It should be understood that the following accompanying drawings show merely some embodiments of the present disclosure, and thus should not be regarded as a limitation to the scope. Those of ordinary skill in the art may still derive other related drawings from these accompanying drawings without creative efforts.
FIG. 1 is a schematic diagram of a process principle for producing an *in-situ* microfibrillation composite (iMFC);
FIG. 2 is a schematic diagram of a warpage-resistant printing model according to some embodiments of the present disclosure;
FIG. 3 is a micrograph of a microfibrous structure in a filament of Example 1 of the present disclosure;
FIG. 4 shows a warpage test result of a 3D printed part of Example 1 of the present disclosure;
FIG. 5 is a micrograph of a microfibrous structure in a filament of Example 2 of the present disclosure;
FIG. 6 shows a warpage test result of a 3D printed part of Example 2 of the present disclosure;
FIG. 7 is a micrograph of a microfibrous structure in a filament of Example 3 of the present disclosure;
FIG. 8 shows a warpage test result of a 3D printed part of Example 3 of the present disclosure;
FIG. 9 shows a warpage test result of a 3D printed part of Comparative Example 1 of the present disclosure;
FIG. 10 shows a warpage test result of a 3D printed part of Comparative Example 2 of the present disclosure; and
FIG. 11 shows a warpage test result of a 3D printed part of Comparative Example 3 of the present disclosure.

### Detailed Description of Embodiments

To make the objectives, technical solutions, and advantages in the embodiments of the present disclosure clear, the technical solutions in the embodiments of the present disclosure will be described clearly and completely below. If no specific conditions are specified in the embodiments, the embodiments will be implemented under conventional conditions or the conditions recommended by a manufacturer. All of the reagents or instruments which are not specified with manufacturers are conventional commercially-available products.

The composite material for 3D printing, the 3D printing filament, and the FFF printing method provided in the present disclosure are described in detail below.

In some embodiments of the present disclosure, a composite material for 3D printing is provided, including: a continuous matrix phase and a fibrous dispersed phase distributed in the continuous matrix phase. The continuous matrix phase is made of a first crystalline polymer and the fibrous dispersed phase is made of a second crystalline polymer. The fibrous dispersed phase has a micro-/nano-scale fibrous structure. A melting point of the second crystalline polymer is higher than a melting point of the first crystalline polymer.

It should be noted that the composite material provided in the above embodiments is designed for 3D printing. Therefore, a material used for the continuous matrix phase should be suitable for 3D printing, such as PLA. Through research on materials for 3D printing, the inventors have found that some common semi-crystalline polymer materials exhibit heat resistance only up to around their glass transition temperature Tg because of poor crystallinity, and thus fail to achieve the potential heat resistance theoretically close to their melting point.

Therefore, based on this, the inventors creatively propose through further research and practice that a common 3D printing material (such as PLA) is used as a continuous matrix phase and a micro-/nano-scale fibrous structure is formed in the continuous matrix phase, where a melting point of the micro-/nano-scale fibrous structure is higher than a melting point of the continuous matrix phase. When printing is conducted using the composite material for 3D printing with such a structure at a temperature lower than the melting point of the fibrous structure (namely, the second crystalline polymer), the fibrous structure as the fibrous dispersed phase can retain its micro-/nano-scale fibrous structure without damage to its crystalline structure. In addition, the high specific surface area of the fibrous dispersed phase enables a significant heterogeneous nucleation effect, promoting an increase in crystallinity of a printed part including the continuous matrix phase (namely, the first crystalline polymer). Moreover, unlike existing blending modifications that involve introducing a material with high T_{g} or high crystallinity, this approach fundamentally enhances the heat resistance of the continuous matrix phase by improving the crystallinity of the continuous matrix phase without relying on the added modifying material itself. The micro-/nano-scale fibrous structure with high crystallinity and high heat resistance itself provides an anti-warpage effect and serves as a supporting skeleton for the continuous matrix phase. As a result, the introduction of the fibrous dispersed phase not only does not adversely affect the warpage of the material but also enhances the warpage resistance of the material to some extent. That is, compared with existing blending-modified materials, the composite material for 3D printing has both heat resistance and warpage resistance improved.

Further, to enable excellent processability of the composite material for 3D printing, a temperature that is lower than the melting point of the second crystalline polymer but higher than the melting point of the first crystalline polymer can be selected as a printing temperature for 3D printing. At the printing temperature, the first crystalline polymer is melted while a morphology of the second crystalline polymer remains unaffected. In some embodiments, the melting point of the second crystalline polymer is 30°C or more higher than the melting point of the first crystalline polymer. For example, if the first crystalline polymer is PLA with a typical melting point of 150°C to 180°C, then the second crystalline polymer is a crystalline polymer with a melting point of 200°C or higher. Preferably, the melting point of the second crystalline polymer is 30°C to 100°C higher than the melting point of the first crystalline polymer.

It should be noted that an amount of the fibrous dispersed phase dispersed in the continuous matrix phase affects the enhancement in processability and heat resistance of the material to some extent. If the content of the fibrous dispersed phase is too low, it may fail to provide a sufficient heterogeneous nucleation effect, resulting in an ineffective improvement in crystallinity of a 3D printed part. If the content of the fibrous dispersed phase is too high, both the printability of the continuous matrix phase and the formation and uniform distribution of the fibrous dispersed phase in the continuous matrix phase may be compromised, and it is prone to agglomeration, which compromises the overall performance of the composite material. Therefore, in some embodiments, a mass percentage of the fibrous dispersed phase in the composite material for 3D printing is 3% to 30%. For example, the mass percentage of the fibrous dispersed phase in the composite material for 3D printing is 3%, 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, or 30%. The mass percentage of the fibrous dispersed phase in the composite material for 3D printing is preferably 3% to 20% and more preferably 5% to 15%.

Further, a fiber morphology of the fibrous dispersed phase also affects the heat resistance and warpage resistance of the composite material. In some embodiments, fiber structures of the fibrous dispersed phase distributed in the continuous matrix phase mainly include fibrous network structures, and inevitably, some fiber structures exist as single fibrous linear structures. Theoretically, the higher the proportion of the fibrous network structures, the better the performance, and the more uniform the distribution of the fiber structures, the better the performance.

Notably, the micro-/nano-scale fibrous structure means that the fibrous dispersed phase has a micro-/nano-scale diameter, which is typically tens of nanometers, hundreds of nanometers, several micrometers, or tens of micrometers. Because the micro-/nano-scale fibrous dispersed phase has a high aspect ratio, a large specific surface area, and excellent dispersibility, an entangled microfibrous network structure can be formed even at a relatively low content of the fibrous dispersed phase, thereby exhibiting an excellent reinforcing effect. In some embodiments, the fibrous structure is mainly a fibrous network structure formed by interweaving fibers with an aspect ratio of greater than 10.

In some embodiments, the first crystalline polymer is PLA. As one of the most commonly used materials in FFF printing that is one of the mainstream ME-3DP technologies, PLA is most compatible with the implementation of the above embodiments of the present disclosure and can address the long-standing technical challenges in achieving high heat resistance for PLA in FFF printing.

In some embodiments, the second crystalline polymer includes a crystalline polyester material and a crystalline polyamide material. Illustratively, the second crystalline polymer may be selected from the group consisting of polyethylene terephthalate (PET), polybutylene terephthalate (PBT), polycaprolactam (nylon 6), and polyhexamethylene adipamide (nylon 66).

Based on the above, in some embodiments of the present disclosure, a preparation method of the composite material for 3D printing in the above embodiments is also provided, including the following step: a blend of the first crystalline polymer and the second crystalline polymer is subjected to *in-situ* fibrillation, such that the fibrous dispersed phase is formed from the second crystalline polymer in the first crystalline polymer.

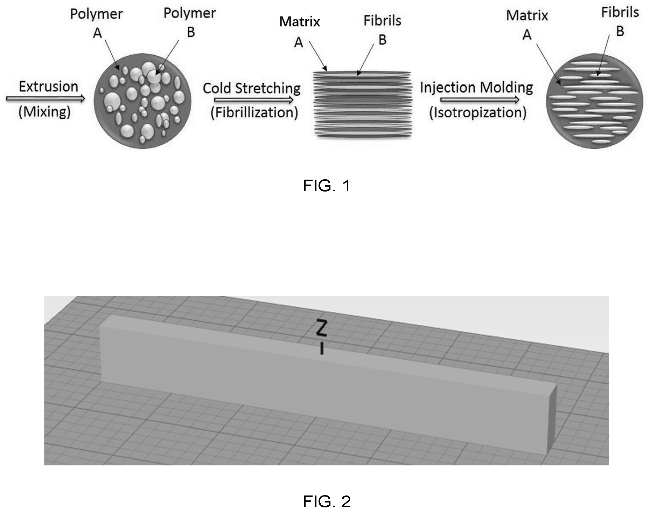

The *in-situ* fibrillation refers to a processing method for a fiber-reinforced material in which multiple incompatible polymers are blended and then subjected to an external force field such that a dispersed phase in a two-phase system is stretched or sheared for orientation along an external force direction and fibrillated to form oriented micro-/nano-scale fibers in a continuous matrix phase. A fiber-reinforced composite material in which a dispersed phase is "*in-situ*" formed into a fibrous phase through such a special processing technique is vividly referred to as "*in-situ* microfibrillation composite (iMFC)". A schematic diagram is shown in FIG. 1.

The *in-situ* fibrillation can effectively lead to the composite material for 3D printing with the specific structure according to the above embodiments. Accordingly, the fibrous dispersed phase is distributed relatively uniformly in the continuous matrix phase.

Further, it should be noted that the composite material for 3D printing and the preparation method thereof in the above embodiments are both designed based on material defects present in 3D printing processes. A second-phase component with a high melting point is introduced into an existing printing material (such as PLA) and subjected to *in-situ* fibrillation to produce the composite material. 3D printing is conducted with the composite material to produce a printed part with both improved heat resistance and excellent warpage resistance.

In some embodiments of the present disclosure, an FFF printing method is provided, including the following steps: the composite material for 3D printing in the above embodiments is processed into a 3D printing filament and then FFF printing is conducted with the 3D printing filament. A printing temperature is higher than the melting point of the first crystalline polymer and lower than the melting point of the second crystalline polymer.

Specifically, based on the above FFF printing method, in some embodiments of the present disclosure, a method for preparing a 3D printing filament is also provided, including the following step: the composite material for 3D printing in the above embodiments is subjected to single-screw extrusion to produce the 3D printing filament. A maximum value of an extrusion temperature range is higher than the melting point of the first crystalline polymer and lower than the melting point of the second crystalline polymer. By selecting the above extrusion temperature, the composite material for 3D printing can be processed into a filament suitable for FFF printing without damaging a microfibrous structure of the composite material.

In some embodiments of the present disclosure, an FFF printed part is further provided, which is printed by the FFF printing method in the above embodiment.

In some embodiments, VST of the FFF printed part printed by the FFF printing method is higher than 100°C, preferably higher than 120°C, and more preferably higher than 150°C.

In some embodiments of the present disclosure, a use of the composite material for 3D printing or the 3D printing filament according to the above embodiments in ME-3DP is also provided. The use includes, but is not limited to, FFF printing.

Based on the above description, the main ideas of the technical solutions of the present disclosure are as follows:
(1) When printing is conducted with the 3D printing filament at a temperature below the melting point of the fibrous dispersed phase, the fibrous dispersed phase, namely, the microfibrous structure, is retained and directly incorporated into a printed part with its crystalline structure undamaged. The fibrous dispersed phase does not undergo warpage caused by internal crystallization stress.
(2) Through the *in-situ* fibrillation of the dispersed phase, micro-/nano-scale fibers with a high specific surface area are formed to enable a significant heterogeneous nucleation effect, promoting an increase in crystallinity of a printed part of a 3D printing base material (such as PLA).
(3) Through the *in-situ* fibrillation of the dispersed phase, a micro-/nano-scale fiber reinforcing phase is formed to produce a microfibrous network structure at a low content, thereby achieving an excellent reinforcing effect and superior warpage resistance of a printed part.

That is, in the prepared micro-/nano-scale fiber-reinforced composite material for 3D printing, the micro-/nano-scale fibers themselves possess high crystallinity and high heat resistance, enabling warpage resistance. Thus, the 3D printing material achieves both superior heat resistance and excellent warpage resistance.

The features and performances of the present disclosure are further described in detail below in conjunction with embodiments.

A test method for warpage resistance during printing in the embodiments of the present disclosure is as follows:
In a preset target external environment, a 3D printing material with target dimensions is printed on a target build platform using a target process flow to produce a rectangular prism target part with target dimensions (L × W × H). A surface of the target part in contact with the target build platform is defined as a bottom surface, and the target part has a length L, a width W, and a height H. After the target part is cooled, heights at which four corners of the bottom surface of the target part detach from the target build platform (namely, distances from the four corners to a topmost point of the target build platform) are measured, and an average value h is calculated. A warpage rate (warp value) of the 3D printing material is then defined as a quotient of the average value h divided by the height H of the target part. That is, the warpage rate is calculated according to the following formula: $warp = \frac{h}{H} \times 100 % .$

Obviously, for a given set of L, W, and H, the smaller the average height h of the four corners of the bottom surface from the target build platform after cooling, the smaller the deformation of the target part during cooling and thus the smaller the warpage rate. In the present disclosure, the warpage resistance during printing can be measured by an amount of deformation of the 3D printing material during printing. The smaller the warpage of a 3D printed part, the better the warpage resistance of the 3D printing material.

It should be understood that, under different standard dimensions and different external cooling environments, a same material experiences varying cooling rates and cooling uniformity levels, and thus exhibits different warpage rates.

FIG. 2 is a schematic diagram of a target printing model adopted in some embodiments of the present disclosure. The target dimensions of the target part in the target printing model may be as follows: L = 150 mm, W = 9.6 mm, and H = 20 mm. In this case, the warpage rate is calculated according to the following formula: $warp = \frac{h}{20} \times 100 % .$

According to some embodiments of the present application, the preset target external environment may include: A printing material is a PLA filament with a diameter of 1.75±0.05 mm. A printing nozzle has a diameter of 0.4 mm. Slicing parameters during printing are as follows: a line width of 0.4 mm, a layer height of 0.2 mm, and a shell count of 13. A printing speed is 100 mm/s. In addition, a printing temperature in these embodiments is appropriately selected according to a material type and extrusion characteristics. For example, a printing temperature for the PLA material is 190°C to 230°C, and a temperature of the build platform is 30°C to 60°C.

For example, if the target part (printed part) has a length of 150 mm and a height of 20 mm and the average warped height h of the four corners after cooling is 1 mm, then the warpage rate (Warp value) is calculated to be 5%.

### Example 1

In this example, an FFF printing method was provided, specifically including the following steps:

### 1) Preparation of a composite material for 3D printing based on in-situ fibrillation

PLA was adopted as a matrix phase (with a melting point Tₘ₁ of 170°C) and PBT was adopted as a dispersed phase (fiber-forming phase) (with a melting point Tₘ₂ of 225°C). A mass content of the fiber-forming phase PBT in the composite material for 3D printing was 10%.

The PLA and the PBT were mixed in a specified ratio, then subjected to compounding at a processing temperature of 160°C to 240°C and extruded into a strand by a twin-screw extrusion process, cooled and shaped in a room-temperature water bath, and then pelletized using a pelletizer to produce iMFC for 3D printing.

### 2) Processing of the iMFC for 3D printing into a filament

A specific operation was as follows: The iMFC was subjected to single-screw extrusion molding at 160°C to 210°C to produce the filament iMFC-Filament.

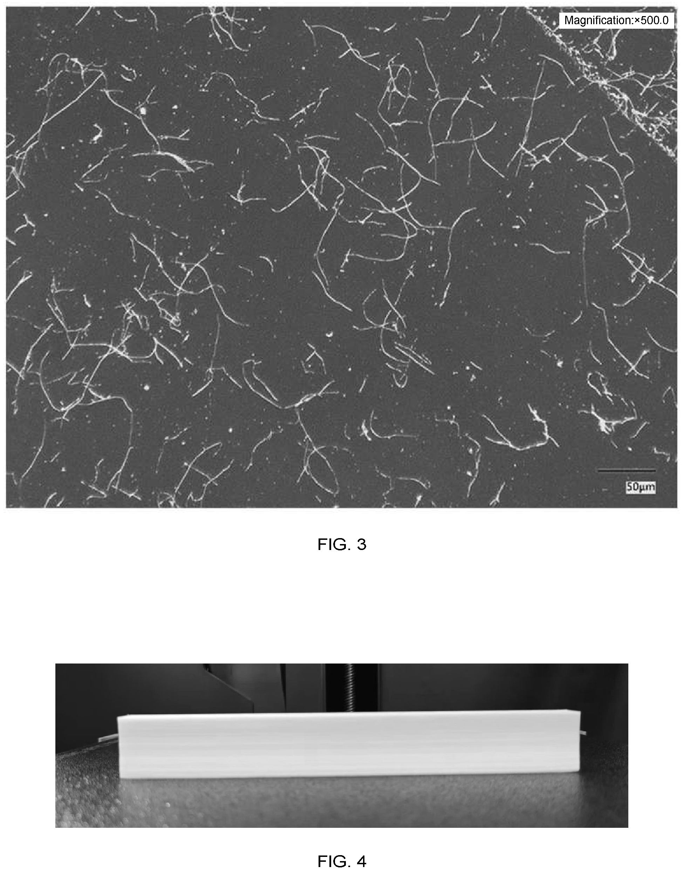

A microfibrous structure of a cross section of the filament iMFC-Filament was observed under a microscope, and the microfibrous structure was shown in FIG. 3.

### 3) FFF printing test for the filament iMFC-Filament

The filament iMFC-Filament was subjected to a warpage resistance test at 210°C. A printed part shown in FIG. 4 was produced by FFF printing. The printed part was a rectangular prism with a length L of 150 mm, a width W of 9.6 mm, and a height H of 20 mm. As shown in FIG. 4, the printed part exhibited no warpage as a whole, indicating excellent warpage resistance.

The printed part was subjected to a Vicat heat resistance test by an A120 method with a force of 10 N and a heating rate of 120°C/h according to the GB/T 1633-2000 standard "Plastics-Thermoplastic materials-Determination of Vicat softening temperature (VST)". VST of the printed part was determined to be 153.9°C, indicating superior heat resistance.

Therefore, the PLA-based iMFC printing material provided in this example exhibited both excellent warpage resistance during printing and superior heat resistance in the printed part.

### Example 2

In this example, an FFF printing method was provided, specifically including the following steps:

### 1) Preparation of a composite material for 3D printing based on in-situ fibrillation

PLA was adopted as a matrix phase (which was the same as that in Example 1 and had a melting point Tₘ₁ of 170°C) and PBT was adopted as a dispersed phase (fiber-forming phase) (with a melting point Tₘ₂ of 225°C). A mass content of the fiber-forming phase PBT in the composite material for 3D printing was 20%.

The PLA and the PBT were mixed in a specified ratio, then subjected to compounding at a processing temperature of 160°C to 240°C and extruded into a strand by a twin-screw extrusion process, cooled and shaped in a room-temperature water bath, and then pelletized using a pelletizer to produce iMFC for 3D printing.

### 2) Processing of the iMFC for 3D printing into a filament

A specific operation was as follows: The iMFC was subjected to single-screw extrusion molding at 160°C to 210°C to produce the filament iMFC-Filament.

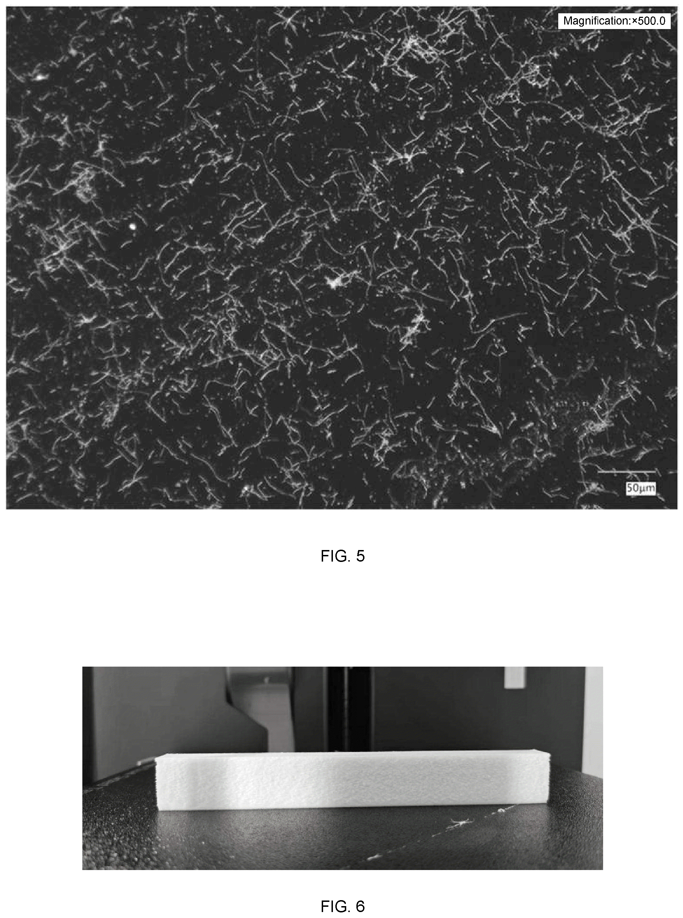

A microfibrous structure of a cross section of the filament iMFC-Filament was observed under a microscope, and the microfibrous structure was shown in FIG. 5.

### 3) FFF printing test for the filament iMFC-Filament

The filament iMFC-Filament was subjected to a warpage resistance test at 210°C. A printed part shown in FIG. 6 was produced by FFF printing. The printed part was a rectangular prism with a length L of 150 mm, a width W of 9.6 mm, and a height H of 20 mm. As shown in FIG. 6, the printed part exhibited no warpage as a whole, indicating excellent warpage resistance.

The printed part was subjected to a Vicat heat resistance test by an A120 method with a force of 10 N and a heating rate of 120°C/h according to the GB/T 1633-2000 standard "Plastics-Thermoplastic materials-Determination of Vicat softening temperature (VST)". VST of the printed part was determined to be 167.3°C, indicating superior heat resistance.

Therefore, the PLA-based iMFC printing material provided in this example exhibited both excellent warpage resistance during printing and superior heat resistance in the printed part.

### Example 3

In this example, an FFF printing method was provided, specifically including the following steps:

### 1) Preparation of a composite material for 3D printing based on in-situ fibrillation

PLA was adopted as a matrix phase (which was the same as that in Example 1 and had a melting point Tₘ₁ of 170°C) and polycaprolactam (nylon 6) PA6 was adopted as a dispersed phase (fiber-forming phase) (with a melting point Tₘ₂ of 220°C). A mass content of the fiber-forming phase PA6 in the composite material for 3D printing was 5%.

The PLA and the PA6 were mixed in a specified ratio, then subjected to compounding at a processing temperature of 160°C to 240°C and extruded into a strand by a twin-screw extrusion process, cooled and shaped in a room-temperature water bath, and then pelletized using a pelletizer to produce iMFC for 3D printing.

### 2) Processing of the iMFC for 3D printing into a filament

A specific operation was as follows: The iMFC was subjected to single-screw extrusion molding at 160°C to 210°C to produce the filament iMFC-Filament.

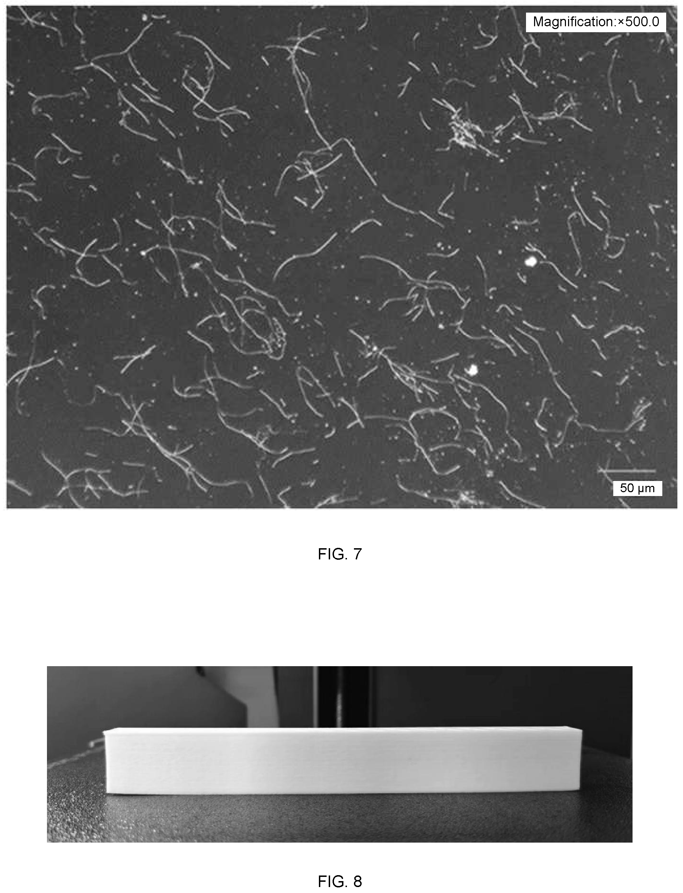

A microfibrous structure of a cross section of the filament iMFC-Filament was observed under a microscope, and the microfibrous structure was shown in FIG. 7.

### 3) FFF printing test for the filament iMFC-Filament

The filament iMFC-Filament was subjected to a warpage resistance test at 210°C. A printed part shown in FIG. 8 was produced by FFF printing. The printed part was a rectangular prism with a length L of 150 mm, a width W of 9.6 mm, and a height H of 20 mm. As shown in FIG. 8, a warpage rate of the printed part was determined to be 0.63%, indicating relatively excellent warpage resistance.

The printed part was subjected to a Vicat heat resistance test by an A120 method with a force of 10 N and a heating rate of 120°C/h according to the GB/T 1633-2000 standard "Plastics-Thermoplastic materials-Determination of Vicat softening temperature (VST)". VST of the printed part was determined to be 133.5°C, indicating superior heat resistance.

Therefore, the PLA-based iMFC printing material provided in this example exhibited both excellent warpage resistance during printing and superior heat resistance in the printed part.

### Comparative Example 1

In this comparative example, the same PLA material as in Example 1 was used to prepare a 3D printing material.

Under the same process conditions as in Example 1, PLA pellets were subjected to single-screw extrusion molding to produce a PLA filament.

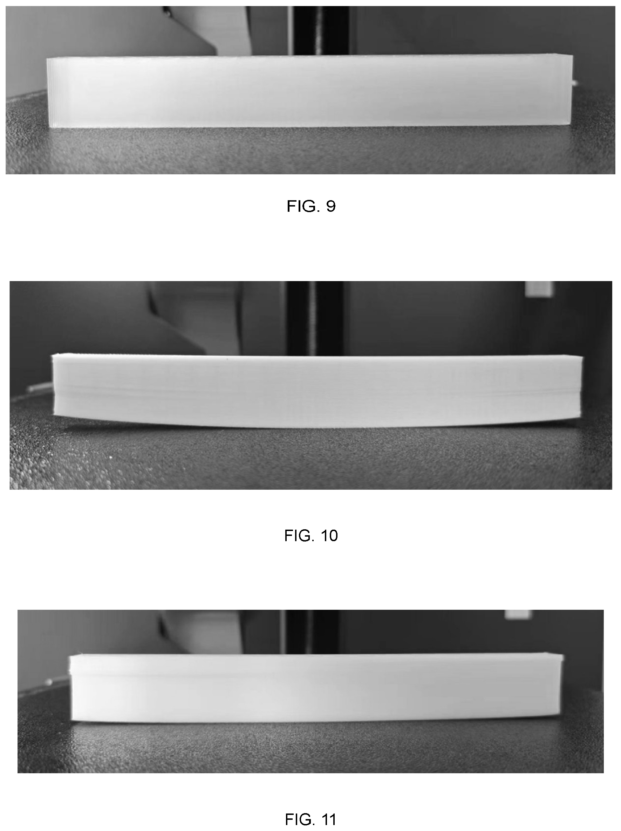

The same warpage resistance test as in Example 1 was conducted. A photograph of a printed part was shown in FIG. 9. As shown in FIG. 9, the printed part exhibited no warpage as a whole, indicating relatively excellent warpage resistance.

VST of the printed part was determined by an A120 method with a force of 10 N and a heating rate of 120°C/h according to the GB/T 1633-2000 standard "Plastics-Thermoplastic materials-Determination of Vicat softening temperature (VST)". The VST of the printed part was determined to be 61.7°C, indicating that the 3D printing material prepared in this comparative example exhibited relatively poor heat resistance.

Therefore, compared with the material in Example 1, the PLA printing material provided in Comparative Example 1 failed to exhibit both excellent warpage resistance during printing and superior heat resistance in the printed part.

### Comparative Example 2

In this comparative example, an organic hydrazide nucleating agent was incorporated into the same PLA material as in Example 1. A weight content of the organic hydrazide nucleating agent in the PLA material was 1%. The same twin-screw compounding and single-screw extrusion processes as in Example 1 were adopted to prepare a 3D printing material.

The same warpage resistance test as in Example 1 was conducted. A photograph of a printed part was shown in FIG. 10. As shown in FIG. 10, the printed part exhibited significant warpage, with a measured warpage rate of 17.3%. Compared with Examples 1, 2, and 3, the printed part in this comparative example showed poor warpage resistance.

Under the same experimental conditions, VST of the printed part was determined to be 145.3°C.

Therefore, compared with the materials in the examples, the PLA printing material provided in Comparative Example 2 failed to exhibit both excellent warpage resistance during printing and superior heat resistance in the printed part.

### Comparative Example 3

In this comparative example, the iMFC filament in Example 1 was adopted, and a comparative test was conducted by changing the printing temperature.

A warpage resistance test was conducted at 240°C. A printed part shown in FIG. 11 was produced. The printed part was a rectangular prism with a length L of 150 mm, a width W of 9.6 mm, and a height H of 20 mm. As shown in FIG. 11, a warpage rate of the printed part was determined to be 9.6%.

VST of the printed part was determined by an A120 method with a force of 10 N and a heating rate of 120°C/h according to the GB/T 1633-2000 standard "Plastics-Thermoplastic materials-Determination of Vicat softening temperature (VST)". The VST of the printed part was determined to be 122.5°C.

Compared with Example 1, when the printing temperature was higher than the melting point of the fiber-forming phase PBT, the microfibrous structure was destroyed, such that both the warpage resistance during printing and the heat resistance of the printed part significantly decreased, further verifying the technical effects of the present disclosure.

Therefore, compared with the material in Example 1, the PLA printing material provided in Comparative Example 3 failed to exhibit both excellent warpage resistance during printing and superior heat resistance in the printed part.

In summary, in the embodiments of the present disclosure, based on the comprehension of FFF printing behaviors of high-crystalline polymer materials, a second-phase component with a high melting point is introduced into a PLA material and subjected to *in-situ* fibrillation to produce PLA-based iMFC. In addition, a specially designed temperature profile is employed to achieve both improved heat resistance and excellent warpage resistance for the PLA material.

The above are merely preferred embodiments of the present disclosure, and are not intended to limit the present disclosure, and various modifications and changes may be made by those skilled in the art to the present disclosure. Any modifications, equivalent substitutions, improvements, etc. made within the spirit and principle of the present disclosure should be included within the scope of protection of the present disclosure.

### Industrial Applicability:

In the composite material of the present disclosure, a first crystalline polymer with a low melting point (such as PLA) is used as a continuous matrix phase and a second crystalline polymer with a high melting point is used as a fibrous dispersed phase. The fibrous dispersed phase has a micro-/nano-scale fibrous structure. When 3D printing is conducted with the composite material as a main material at a temperature below the melting point of the second crystalline polymer, the second crystalline polymer as the fibrous dispersed phase can retain its micro-/nano-scale fibrous structure without damage to its crystalline structure. When the composite material is directly introduced into a printed part, the fibrous dispersed phase does not undergo a warpage behavior caused by crystallization-induced internal stress. Moreover, the high specific surface area of the fibrous dispersed phase enables a significant heterogeneous nucleation effect, promoting an increase in crystallinity of the printed part including the first crystalline polymer (such as PLA). Therefore, the printing material achieves both improved heat resistance during printing and excellent warpage resistance, and demonstrates promising industrial application prospects.

## Claims

1. A composite material for three-dimensional (3D) printing, comprising: a continuous matrix phase and a fibrous dispersed phase distributed in the continuous matrix phase, wherein the continuous matrix phase is made of a first crystalline polymer and the fibrous dispersed phase is made of a second crystalline polymer; the fibrous dispersed phase has a micro-/nano-scale fibrous structure; and a melting point of the second crystalline polymer is higher than a melting point of the first crystalline polymer.

2. The composite material for 3D printing according to claim 1, wherein the melting point of the second crystalline polymer is 30°C or more higher than the melting point of the first crystalline polymer.

3. The composite material for 3D printing according to claim 1 or 2, wherein a mass percentage of the fibrous dispersed phase in the composite material for 3D printing is 3% to 30%.

4. The composite material for 3D printing according to any one of claims 1 to 3, wherein the micro-/nano-scale fibrous structure comprises fibers with an aspect ratio of greater than 10 and a diameter of 0.1 µm to 50 µm.

5. The composite material for 3D printing according to any one of claims 1 to 4, wherein the first crystalline polymer is polylactic acid (PLA).

6. The composite material for 3D printing according to any one of claims 1 to 5, wherein the second crystalline polymer comprises a crystalline polyester material and a crystalline polyamide material.

7. The composite material for 3D printing according to claim 6, wherein the second crystalline polymer comprises at least one selected from the group consisting of polyethylene terephthalate (PET), polybutylene terephthalate (PBT), polycaprolactam, and polyhexamethylene adipamide.

8. A preparation method of the composite material for 3D printing according to any one of claims 1 to 7, comprising: subjecting a blend of the first crystalline polymer and the second crystalline polymer to *in-situ* fibrillation, such that the fibrous dispersed phase is formed from the second crystalline polymer in the first crystalline polymer.

9. A method for preparing a 3D printing filament, comprising: subjecting the composite material for 3D printing according to any one of claims 1 to 7 to single-screw extrusion to produce the 3D printing filament, wherein a maximum value of an extrusion temperature range is higher than the melting point of the first crystalline polymer and lower than the melting point of the second crystalline polymer.

10. A 3D printing filament prepared by the method according to claim 9.

11. A use of the composite material for 3D printing according to any one of claims 1 to 7 or the 3D printing filament according to claim 10 in material-extrusion based 3D printing (ME-3DP).

12. A fused filament fabrication (FFF) printing method, comprising: conducting FFF printing with the 3D printing filament according to claim 10, wherein a printing temperature is higher than the melting point of the first crystalline polymer and lower than the melting point of the second crystalline polymer.

13. An FFF printed part printed by the FFF printing method according to claim 12.

14. The FFF printed part according to claim 13, wherein a Vicat softening temperature (VST) of the FFF printed part is higher than 100°C.
